Europäisches Patentamt

European Patent Office

Office européen des brevets

(11) Publication number: **0 341 096**
A2

# (12) EUROPEAN PATENT APPLICATION

(21) Application number: 89304641.7

(22) Date of filing: 08.05.89

(51) Int. Cl.⁴: **G 01 N 21/62**
G 01 N 21/65, G 01 N 23/223
// G01N21/87, B07C5/342

(30) Priority: 06.05.88 GB 8810723
07.07.88 GB 8816156
09.11.88 GB 8826225
23.03.89 GB 8906853

(43) Date of publication of application:
08.11.89 Bulletin 89/45

(84) Designated Contracting States: BE DE NL

(71) Applicant: GERSAN ESTABLISHMENT
Staedtle 36
FL-9490, Vaduz (LI)

(72) Inventor: Smith, Martin Philip
18 Hamilton Road
Wargrave Berkshire RG10 8BB (GB)

Steward, Andrew David Garry
The Old Rectory
Ashampstead Reading Berkshire (GB)

Cooper, Martin
37 Terrington
Marlow Buckinghamsire SL7 2RE (GB)

Welbourn, Christopher Mark
Oswald London Road
Sunningdale Berkshire (GB)

Spear, Paul Martin
3 Bottisham Close Lower Early
Reading Berkshire RG6 4ED (GB)

(74) Representative: Lyndon-Stanford, Edward Willoughby
Brooke et al
MARKS & CLERK 57/60 Lincoln's Inn Fields
London WC2A 3LS (GB)

(54) A method of identifying individual objects or zones.

(57) In order to separate diamonds from gangue, the particles 2 of the gangue are carried along a belt 1, and are irradiated with a beam from a laser 3. The luminescence emitted by the particles 2 is then detected by two spaced optical modules 5,5'. The difference in the luminescence detected is related to the nature of the material, and a simple microprocessor 11 and ejection jet 12 can be used to eject diamonds into a sort bin.

FIG.1.

EP 0 341 096 A2

Bundesdruckerei Berlin

## Description

## A METHOD OF IDENTIFYING INDIVIDUAL OBJECTS OR ZONES

Background of Invention

This invention relates to apparatus and a method for identifying specific objects or zones which respond to an exciting radiation by emitting luminescence. The invention was developed for sorting gemstones, and specifically diamonds, from gangue (gemstone-bearing ore). However, the invention can be used as a general technique for examining a large area, and this generally can be applied to identifying any suitable discrete objects, or can be applied to general inspection techniques.

The remainder of the description is particularly concerned with using Raman emission or luminescence, but the invention is equally applicable to using other radiation. The possibility of using the Raman shift to sort or identify diamonds has been described in general terms in for instance GB-A-2 140 555, GB-A-2 199 657, WO 86/07457 and WO 88/01378.

The Invention

The present invention provides methods as set forth in Claims 1 or 12 and apparatus as set forth in Claims 6 or 13. The remaining Claims set forth preferred or optional features of the invention.

The invention exploits variation of spectral output with time, and specifically the different rise/decay time or life time mechanisms associated with diamond and gangue. Time separation is required, and this is preferably achieved by movement though for instance time switching detectors could be used for a single particle system. If objects or particles are travelling along a belt, two optical systems can be positioned to view the same particle but at different points down the belt separated by a distance equivalent to a known time interval, each optical system having a suitable detector. The signal from the first detector is recorded when a suitable particles passes by, and a second signal is captured from the same particle further along the belt. The variations in the threshold/ratio signals as a function of time can then be calculated and used to identify whether the particle is e.g. a diamond. For instance, if the first detector gives a signal and the second detector does not, the decay time is short and the emission is likely to be a Raman emission associated with diamonds (this depends on the time interval - various separations can be used for different luminescences, for instance 10 ns or 10 ms). Although the method may not positively identify diamonds, it can produce a concentrate which is very valuable economically.

In its simplest form, the invention can be performed transporting the material using a V-belt with two simple optical systems - the particles travel along a single straight light. However, a wide belt could be used with suitable optical systems; positional stability of the material on the belt would be required, and this can be achieved for instance using longitudinal segmented grooves. The detection could be carried out in flight, provided the particles have sufficient positional stability.

Any suitable luminescence emission can be used, provided the differing rise/decay times (for instance associated with pre- and post-dense media separator gangue feed material) are sufficiently different to provide a useful sort; the radiation need not be in the visible spectrum. The exciting radiation can be any suitable radiation such as X-ray, ultra-violet, infra-red or visible laser.

The invention can rely on a change in absolute signal level, or a change in spectral content, or both, as a function of time.

The Drawings

The invention will be further described, by way of example, with reference to the accompanying drawings, in which:

Figure 1 is a schematic view of a first embodiment of the invention;

Figure 2 is a schematic view of a second embodiment of the invention; and

Figure 3 is a schematic view of an alternative arrangement that can be incorporated in the embodiment of Figure 2.

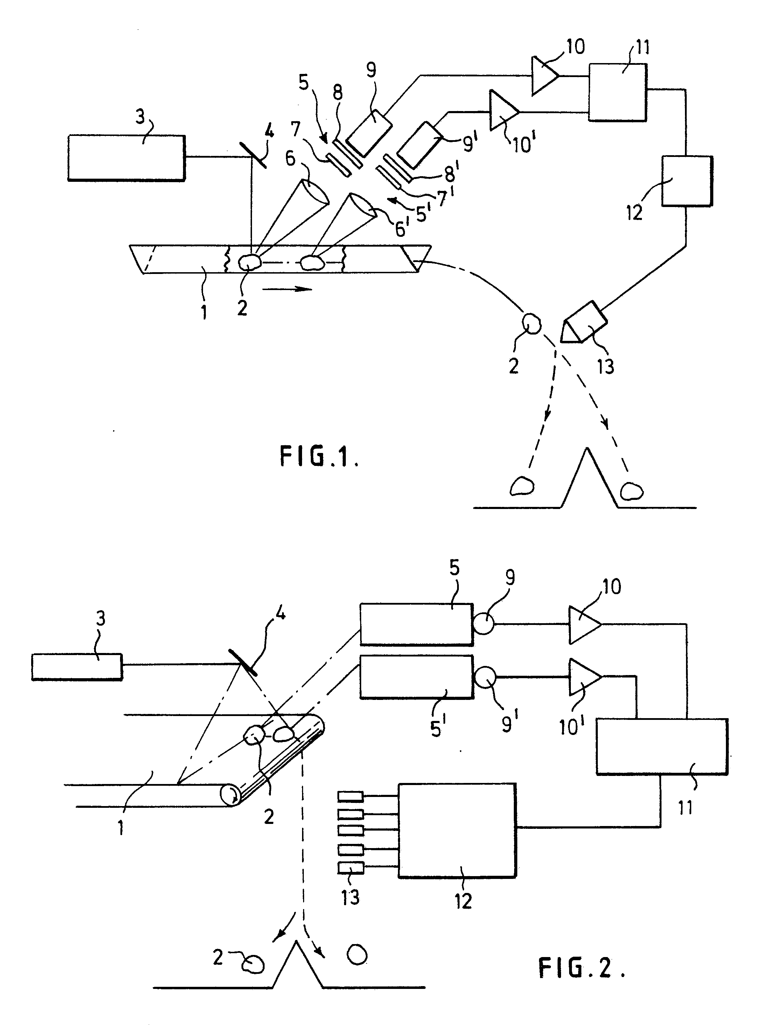

In general, each embodiment has a feed mechanism 1 carrying the objects or particles 2, a source 3 of exciting radiation and means 4 for directing the radiation on to the particles 2. There are two optical detection modules 5, 5', each of which comprises an efficient optical signal collection system schematically represented at 6, 6', a narrow band pass filter 7, 7', a blocking filter 8 for the exciting radiation, and a detector 9, 9'. The optical signal collection system can be the system described with reference to Figures 2 to 7 of our Patent Application EP 89 304 642. The detector 9, 9' can be any suitable detector, such as a PMT (photo-multiplier tube) or a photo-diode. Each detector 9, 9' is selected and operated in a mode to enhance its time resolution characteristics. The detectors 9, 9' are connected through amplifiers 10, 10' to a microprocessor 11 whose output signal is passed to an air jet logic 12 which actuates one or more air jets 13 to eject the required particle 2 from its normal trajectory.

The first module 5 detects the signal given by the particle 2 during excitation. The second module 5' detects the signal, if any, after the particle 2 has passed through the exciting radiation. A decision is made on the two signals in the microprocessor 11, whether the particle 2 is of interest and should be ejected. In one specific arrangement, the Raman luminescence (preferably the Stokes, though the anti-Stokes may be usable and better) is detected by the first module 5 and the broad band fluorescence background is detected by the second module 5'. The signal given by the second module 5' is subtracted from the signal given by the first module 5, to determine if Raman radiation is present on the signal detected by the first module 5.

In an alternative arrangement, using different narrow band pass filters 7, 7′, different wavelengths can be detected by first and second modules 5, 5′.

Figure 1 shows an arrangement in which a fast-moving V-belt 1 confines gangue particles 2 on the belt 1 to travel along a straight line (as seen in plan). The irradiating means 3, which may be a laser (e.g. an Argon ion laser operating at 514.5 nm), illuminates a spot in the centre of the belt 1.

Figure 2 shows an arrangement in which a wide belt 1 is used. A line across the belt is irradiated using the means 4 which can be a scanner provided with an encoder connected to the microprocessor 11, or (particularly if the radiation is X-ray), merely spreads the radiation along a transverse line. The optical modules 5, 5′ examine the whole width of the belt 1 and detect the position of the required particle 2 across the belt, the appropriate air jet 13 being energised.

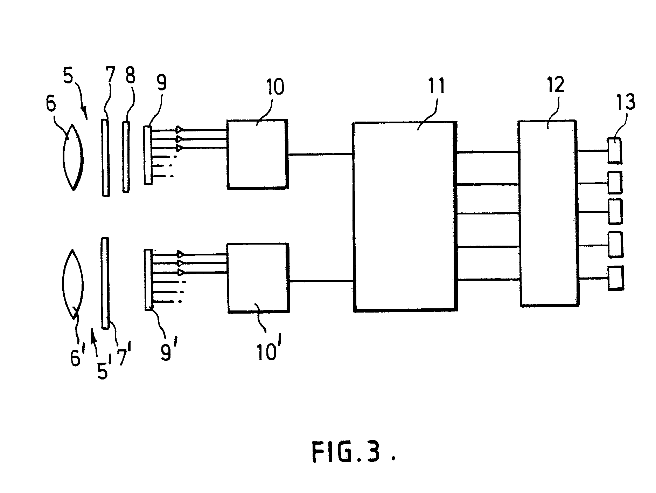

Figure 3 shows an arrangement in which the optical systems 5, 5′ can be much simpler, the detectors 9, 9′ being intensified CCD (charge coupled device) arrays each inspecting a section of, or track along, the belt 1 and aligned with the corresponding CCD element of the other optical system. The individual CCD elements are connected through amplifiers 10 in a conventional manner so as to be able to give positional signals.

The time interval between the two detection modules 5, 5′ will depend upon the luminescence being detected and analyzed, but one arrangement provides an interval of 0.1 - 0.5 seconds, with a belt speed of 1 - 5 m/s and the modules 0.5 m apart. The time interval will depend upon physical limitations in designing the apparatus. The distance apart can be 50 nm, achievable using mirrors.

Beam splitters (not shown) and additional optical channels can be incorporated to enable a number, say three, of different wavelength bands to be examined for attenuation.

### Examples

This can be carried out using the apparatus of Figure 1. The first module 5 detects Stokes Raman from diamonds and the second module 5 detects broad band luminescence from diamonds. Belt speeds are 1.6 m/s for Example 1 and 3 m/s for Example 2. The laser wavelength is 514.5 nm. Filters 7, 7′ are centred at 552.4 nm with a pass band of 1 or 2 nm. For sorting, a signal at the first module 5 and not at the second module 5 indicates Raman and hence diamond: a signal at the first module 5 and also at the second module 5 indicates luminescence and (usually) not diamond - most diamonds have a luminescence which is short compared to that of gangue materials.

Anything discussed in said Patent Application can be incorporated in the present invention, provided it is suitable. Said Patent Application gives many details which are applicable to the present invention.

The present invention has been described above purely by way of example, and modifications can be made within the spirit of the invention.

### Claims

1. A method of identifying specific objects or zones which respond to an exciting radiation by emitting luminescence, comprising:
subjecting the objects or zones to exiting radiation;
detecting emitted luminescence at a first time;
detecting emitted luminescence at a second time, after the first time; and
sensing a different in the emitted luminescence at the two times.

2. The method of Claim 1, wherein the luminescence detected at the first time is a narrow band luminescence and the luminescence detected at the second time is a broad band fluorescence background.

3. The method of Claim 2, wherein the luminescence detected at the first time is Raman luminescence.

4. The method of Claim 3, wherein the luminescence detected at the first time is anti-Stokes luminescence.

5. The method of any of the preceding Claims, wherein relative motion occurs between the objects or zones and detecting means for detecting the luminescence.

6. Apparatus for identifying specific objects or zones which respond to an exciting radiation by emitting luminescence, the apparatus comprising:
means for detecting emitted luminescence at two times; and
means for sensing a difference in the emitted luminescence at the times.

7. The apparatus of Claim 6, wherein the detecting means comprise a first system for detecting emitted luminescence, a second system for detecting emitted luminescence, spaced from the first system, and means for inducing relative motion between the two detecting systems of the objects or zones, whereby the objects or zones are examined by the first detecting system before being examined by the second detecting system.

8. The apparatus of Claim 7, wherein the first and second systems detect the same wavelength.

9. The apparatus of any of Claims 6 to 8, wherein the narrow band luminescence is detected at the first time and the broad band fluorescence background is detected at the second time.

10. The apparatus of Claim 9, wherein Raman luminescence is detected at the first time.

11. The apparatus of Claim 9, wherein anti-Stokes luminescence is detected at the first time.

12. A method of identifying specific objects or zones, and substantially as herein described with reference to any of the Figures of the accompanying drawing or in either of the foregoing Examples.

13. Apparatus for identifying specific objects or zones, and substantially is herein described with reference to, and as shown in, any of the Figures of the accompanying drawing or in either of the foregoing Examples.

14. The apparatus of any of Claims 6 to 11 and 13, and further comprising means for irradiation the objects or zones with exciting radiation.

FIG.1.

FIG.2.

FIG.3.